# EUROPÄISCHE PATENTSCHRIFT

(11) **EP 0 839 696 B1**
(45) Veröffentlichungstag und Bekanntmachung des Hinweises auf die Patenterteilung: **05.09.2001**
(21) Anmeldenummer: 97118817.2
(22) Anmeldetag: 29.10.1997
(51) Int. Cl.: B60R 22/38

(54) **Steuerscheibe für einen Gurtaufroller**
Control disc for a belt retractor
Disque de commande pour un rétracteur de sangle

(30) Priorität: 04.11.1996 DE 29619109 U
(43) Veröffentlichungstag der Anmeldung: 06.05.1998
(73) Patentinhaber: TRW Occupant Restraint Systems GmbH & Co. KG, 73551 Alfdorf (DE)
(72) Erfinder: Kielwein, Thomas, 73569 Eschach (DE); Hermanni, Andreas, 73553 Alfdorf (DE)
(74) Vertreter: Degwert, Hartmut, Dipl.-Phys.

(56) Entgegenhaltungen:
- DE-A- 3 338 187
- DE-A- 4 001 240

## Beschreibung

Die Erfindung betrifft eine Steuerscheibe für einen Gurtaufroller, die eine Trägheitsscheibe sowie einen Betätigungsfortsatz aufweist, wobei die Trägheitsscheibe relativ zur Steuerscheibe drehbar ist und mit dieser durch eine Rutschkupplung verbunden ist und wobei die Rutschkupplung in radialer Richtung an der Trägheitsscheibe angreift.

Eine solche Steuerscheibe, die aus der Gattungsbildenden DE-A-33 38 187 bekannt ist, ist Teil eines Sperrmechanismus, mit dem die Gurtspule des Gurtaufrollers, auf die das Gurtband aufgewickelt ist, in fahrzeug- oder in gurtbandsensitiver Weise gegen eine Drehung in der Abwickelrichtung blockiert werden kann. Der Sperrmechanismus eines solchen Gurtaufrollers ist bekannt, weshalb auf ihn hier nur kurz eingegangen wird.

Die Steuerscheibe des Sperrmechanismus ist relativ zur Gurtspule begrenzt verdrehbar. Wenn der Sperrmechanismus fahrzeugsensitiv, also durch Überschreiten einer vorbestimmten Beschleunigung bzw. Verzögerung des Fahrzeugs, oder gurtbandsensitiv, also durch Überschreiten einer vorbestimmten Drehbeschleunigung der Gurtspule aufgrund von in dem Gurtband wirkenden Zugkräften, ausgelöst wird, kommt es zu einer Verdrehung der Steuerscheibe relativ zur Gurtspule, wodurch der Betätigungsfortsatz in eine Aktivierungsstellung verschwenkt wird, so daß die Gurtspule drehfest mit einem Steuerhebel oder ähnlichem Funktionsteil gekoppelt wird, welches bei einer Drehung der Gurtspule in der Abwickelrichtung eine lasttragende Sperrklinke aktiviert und so die Sperrung der Gurtspule hervorruft. Die Gurtspule ist dann in der Abwickelrichtung blockiert.

In jüngster Zeit werden vermehrt Gurtstraffvorrichtungen verwendet, welche nach einer Betätigung die sogenannte Gurtlose des Sicherheitsgurtsystems beseitigen, so daß der Fahrzeuginsasse möglichst früh an einer Verzögerung des Fahrzeugs teilnimmt. Bekannt sind insbesondere Schloßstraffer, bei denen das Gurtschloß derart bewegt wird, daß der Sicherheitsgurt straffgezogen wird, und Aufrollerstraffer, bei denen die Gurtspule in der Aufwickelrichtung gedreht wird, so daß überschüssiges Gurtband aufgewickelt wird. Bei beiden Systemen kommt es zu einer hohen Beschleunigung der Gurtspule und der mit ihr verbundenen Funktionsteile, und zwar bei einem Schloßstraffer in der Gurtband-Abwickelrichtung und bei einem Aufrollerstraffer in der Gurtband-Aufwickelrichtung. Die hohen Beschleunigungen könnten zu einer Beschädigung der Funktionsteile des Sperrmechanismus führen, so daß nach einem Straffvorgang eine ordnungsgemäße Funktion des Gurtaufrollers nicht gewährleistet wäre. Daher kann vorgesehen sein, daß gewisse Teile des Gurtaufrollers von der Gurtspule entkoppelt werden, wenn es zu einer hohen Drehbeschleunigung der Gurtspule kommt. Beispielsweise ist bekannt, die Steuerscheibe mit einer Stirnverzahnung zu versehen, die mit einer zugeordneten Verzahnung an der Gurtspule zusammenwirkt, wobei die Steuerscheibe elastisch in Richtung der Gurtspule beaufschlagt ist. Auf diese Weise kann eine Rutschkupplung erhalten werden, mittels der die Steuerscheibe beim Überschreiten einer vorbestimmten Drehbeschleunigung der Gurtspule von dieser abkoppelbar ist.

Ferner ist aus der oben genannten DE-A-33 38 187 eine Steuerscheibe bekannt, die mit einem Fortsatz versehen ist, auf dem eine Massescheibe gelagert ist. Es ist eine an dem Fortsatz angebrachte Ratschenfeder vorgesehen, welche eine in einer Richtung wirksame Rutschkupplung zwischen der Steuerscheibe und der Massescheibe bildet. Auf diese Weise kann beim Überschreiten einer vorbestimmten Drehbeschleunigung die Massescheibe von der Steuerscheibe abgekoppelt werden.

Im Gegensatz zu dieser bekannten Konstruktion ist erfindungsgemäß vorgesehen, daß die Rutschkupplung in radialer Richtung an der Trägheitsscheibe angreift und daß die Trägheitsscheibe mit einer Mittelöffnung versehen ist, deren Rand eine Vielzahl von radialen Ausnehmungen aufweist, und daß die Steuerscheibe mit mehreren federnden Rastnasen versehen ist, welche die Mittelöffnung durchgreifen und an deren Rand angreifen. Die Rutschkupplung ist in beiden Richtungen wirksam, ermöglicht also eine Relativdrehung zwischen der Trägheitsscheibe und der Steuerscheibe in beiden Richtungen. Bei dieser Gestaltung ergibt sich ein in axialer Richtung besonders kompakter Sperrmechanismus des Gurtaufrollers. Ferner kann das Drehmoment, bei dem die Rutschkupplung eine Relativdrehung zwischen Steuerscheibe und Trägheitsscheibe zuläßt, in besonders einfacher Weise durch die Wahl des Wirkradius der Rutschkupplung festgelegt werden, also durch Wahl des Radius der Mittelöffnung der Trägheitsscheibe. Durch die Verwendung von mehreren Rastnasen wird die Trägheitsscheibe symmetrisch an der Steuerscheibe gehalten, so daß sie sich nicht verkanten kann.

Weitere Merkmale der Erfindung ergeben sich aus den Unteransprüchen.

Die Erfindung wird nachfolgend anhand einer bevorzugten Ausführungsform erläutert, die in den beigefügten Zeichnungen dargestellt ist. In diesen zeigen:
- Fig. 1 eine perspektivische, teilgeschnittene Ansicht einer erfindungsgemäßen Steuerscheibe mit ihrer Trägheitsscheibe;

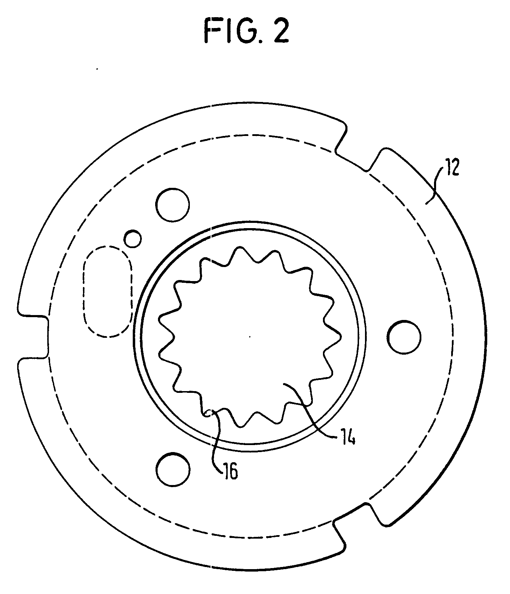

- Fig. 2 eine Draufsicht auf die Trägheitsscheibe von Fig. 1;
- Fig. 3 eine Draufsicht auf die Steuerscheibe von Fig. 1; und
- Fig. 4 ein Detail der Steuerscheibe von Fig. 3.

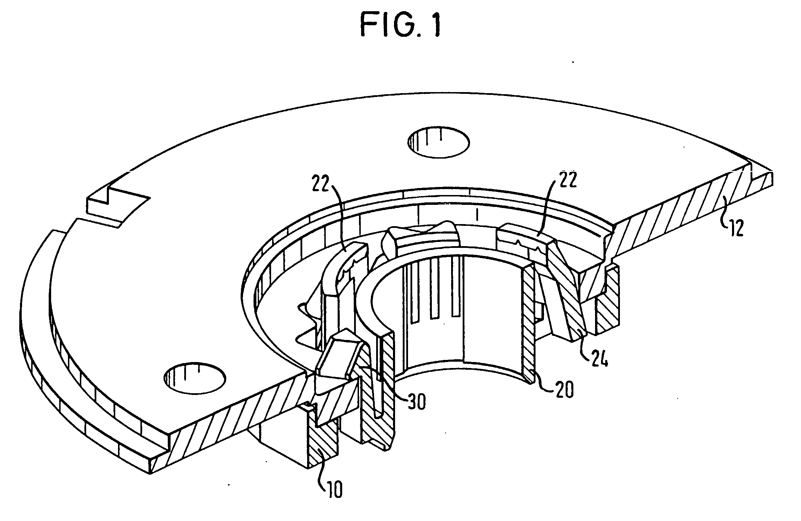

In Figur 1 ist in einer perspektivischen, teilgeschnittenen Ansicht eine erfindungsgemäße Steuerscheibe 10 für einen Gurtaufroller dargestellt, die mit einer Trägheitsscheibe 12 versehen ist. Diese Trägheitsscheibe 12 besteht aus Metall und ist mit einer Mittelöffnung 14 versehen, an deren Rand eine Vielzahl von Ausnehmungen 16 vorgesehen ist, die eine V-förmige Gestalt haben.

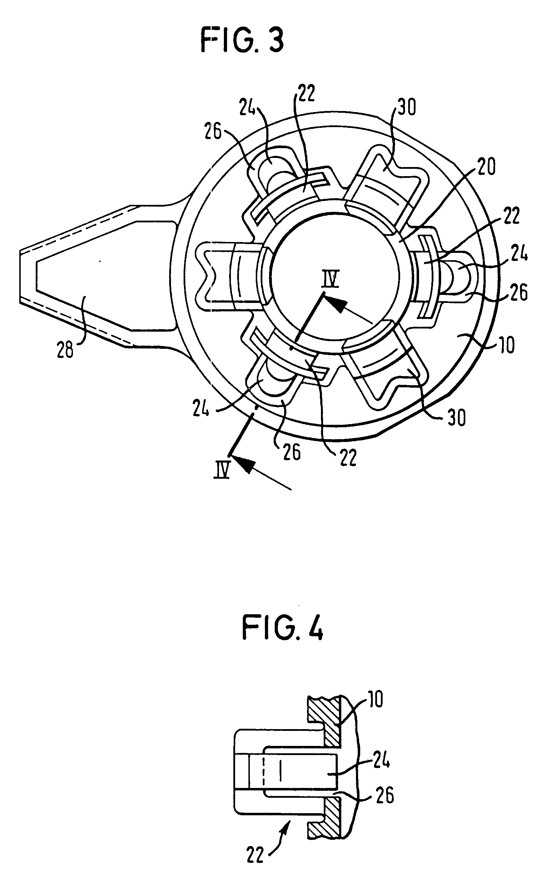

Die Steuerscheibe 10 (siehe auch Figur 3) ist mit einer Lagerhülse 20 für ihre Anbringung versehen. Um diese Lagerhülse 20 herum sind drei Rastnasen 22 (siehe auch Figur 4) gleichmäßig voneinander beabstandet angebracht. Jede Rastnase 22 ragt von der Steuerscheibe 10 in axialer Richtung ab. An dem freien Ende jeder Rastnase 22 ist eine Rastlasche 24 vorgesehen, die sich ebenfalls in axialer Richtung zur Steuerscheibe 10 hin erstreckt. Diese Rastlasche 24 ragt bis in eine Öffnung 26 hinein, die in der Steuerscheibe auf demselben Radius wie die entsprechende Rastnase 22 ausgebildet ist. Diese Öffnung 26 ist in Umfangsrichtung der Steuerscheibe 10 gesehen breiter als die entsprechende Rastlasche 24, wobei die gegenseitigen Abmessungen so gewählt sind, daß es bei einer Verformung der Rastlasche 24 in der Umfangsrichtung der Scheibe 10 zur Anlage dieser Rastlasche an der Wandung der Öffnung kommt, bevor die Rastlasche 24 bzw. die Rastnase 22 plastisch verformt werden; es kommt also lediglich zu elastischer Verformung.

Die Steuerscheibe 10 ist außerdem mit einem Betätigungsfortsatz 28 sowie mit drei Haltelaschen 30 versehen. Die Haltelaschen erstrecken sich ebenfalls in axialer Richtung und sind in gleichmäßigem Abstand voneinander zwischen den Rastnasen 22 angeordnet.

Wie insbesondere in Figur 1 zu sehen ist, ist die Trägheitsscheibe 12 so an der Steuerscheibe 10 angeordnet, daß die Rastnasen 22 und die Haltelaschen 30 die Mittelöffnung 14 der Trägheitsscheibe 12 in axialer Richtung durchgreifen, wobei die Haltelaschen 30 die Trägheitsscheibe 12 in axialer Richtung an der Steuerscheibe 10 festlegen. Die Rastnasen 22 und insbesondere die Rastlaschen 24 greifen jeweils in eine der V-förmigen Ausnehmungen 16 ein.

Die Abmessungen der Mittelöffnung 14, der Ausnehmungen 16 sowie der Rastnasen 22 und der Rastlaschen 24 sind so gewählt, daß die Rastlaschen 24 mit den Ausnehmungen 16 nach Art einer Rutschkupplung zusammenwirken, die nach Überschreiten eines vorbestimmten Drehmoments, das zwischen der Steuerscheibe 10 und der Trägheitsscheibe 12 wirkt, eine Relativdrehung zwischen diesen ermöglicht. Bei einer solchen Relativdrehung werden die Rastnasen 22 zusammen mit den Rastlaschen 24 in radialer Richtung nach innen verformt, wobei es zur Anlage der Rastlaschen 24 an der Wandung der entsprechenden Öffnung 26 kommen kann.

Mit dieser Gestaltung der Steuerscheibe 10 und der Trägheitsscheibe 12 ist die Trägheitsscheibe von der Steuerscheibe entkoppelt, wenn hohe Drehbeschleunigungen auf die Steuerscheibe 10 einwirken. Die für die Entkopplung verwendete Rutschkupplung ist besonders kompakt, während gleichzeitig ein sehr gut reproduzierbares Nenndrehmoment erzielt wird, ab dem es zu einer Relativdrehung zwischen der Steuerscheibe und der Trägheitsscheibe kommt.

## Patentansprüche

1. Steuerscheibe (10) für einen Gurtaufroller, die eine Trägheitsscheibe (12) sowie einen Betätigungsfortsatz (28) aufweist, wobei die Trägheitsscheibe (12) relativ zur Steuerscheibe (10) drehbar ist und mit dieser durch eine Rutschkupplung (16, 22, 24) verbunden ist und wobei die Rutschkupplung (16, 22, 24) in radialer Richtung an der Trägheitsscheibe (12) angreift, **dadurch gekennzeichnet**, daß die Trägheitsscheibe (12) mit einer Mittelöffnung (14) versehen ist, deren Rand eine Vielzahl von radialen Ausnehmungen (16) aufweist, und daß die Steuerscheibe (10) mit mehreren federnden Rastnasen (22) versehen ist, welche die Mittelöffnung (14) durchgreifen und an deren Rand angreifen.

2. Steuerscheibe nach Anspruch 1, **dadurch gekennzeichnet**, daß jede Rastnase (22) von der Steuerscheibe (10) in axialer Richtung abragt und mit einer Rastlasche (24) versehen ist, die sich ebenfalls in axialer Richtung erstreckt und mit der Rastnase (22) an deren freiem Ende verbunden ist.

3. Steuerscheibe nach Anspruch 2, **dadurch gekennzeichnet**, daß die Steuerscheibe (10) mit mehreren Öffnungen (26) versehen ist, die jeweils einer Rastnase (22) zugeordnet sind und sich jeweils auf demselben Radius wie diese befinden, und daß jede Rastlasche (24) sich bis in diese Öffnung (26) hinein erstreckt.

4. Steuerscheibe nach Anspruch 3, **dadurch gekennzeichnet**, daß die Abmessungen der Rastlaschen (24) und der Öffnungen (26) jeweils so gewählt sind, daß sich jede Rastlasche (24) in Umfangsrichtung bis in Anlage an die Wandung der Öffnung (26) elastisch verformen kann.

5. Steuerscheibe nach einem der vorhergehenden Ansprüche, **dadurch gekennzeichnet**, daß die Steuerscheibe (10) mit mehreren Haltelaschen (30) versehen ist, welche die Mittelöffnung (14) der Trägheitsscheibe (12) durchqueren und diese in axialer Richtung an der Steuerscheibe (10) festlegen.

6. Steuerscheibe nach Anspruch 5, **dadurch gekennzeichnet**, daß drei Rastnasen (22) und drei Haltelaschen (30) vorgesehen sind.

7. Steuerscheibe nach einem der vorhergehenden Ansprüche, **dadurch gekennzeichnet**, daß die Trägheitsscheibe (12) aus Metall und die Steuerscheibe (16) aus Kunststoff besteht.

8. Steuerscheibe nach einem der vorhergehenden Ansprüche, **dadurch gekennzeichnet**, daß jede Ausnehmung (16) V-förmig ist.

## Claims

1. A control disk (10) for a belt retractor, comprising an inertial disk (12) and an actuating projection (28), the inertial disk (12) being rotatable relative to the control disk (10) and connected thereto by a slipping clutch (16, 22, 24) and the slipping clutch (16, 22, 24) engaging the inertial disk (12) in a radial direction, **characterized in that** the inertial disk (12) is provided with a central opening (14), the edge of which comprises a plurality of radial recesses (16), and in that the control disk (10) is provided with several flexible latching noses (22) which pass through the central opening (14) and engage the edge thereof.

2. The control disk as set forth in claim 1, **characterized in that** each of the latching noses (22) protrudes axially from the control disk (10) and is provided with a latching strap (24) which also extends axially and is connected to the latching nose (22) by the free end thereof.

3. The control disk as set forth in claim 2, **characterized in that** the control disk (10) is provided with several openings (26), each of which is assigned to a latching nose (22) and is located on the same radius thereof, and in that each latching strap (24) extends as far as into this opening (26).

4. The control disk as set forth in claim 3, **characterized in that** the dimensions of the latching straps (24) and the openings (26) are each selected such that each latching strap (24) is able to elastically deform circumferentially until it abuts at the wall of the opening (26).

5. The control disk as set forth in any of the preceding claims, **characterized in that** the control disk (10) is provided with several retaining straps (30) which pass through the central opening (14) of the inertial disk (12) and fix the latter axially at the control disk (10).

6. The control disk as set forth in claim 5, **characterized in that** three latching noses (22) and three retaining straps (30) are provided.

7. The control disk as set forth in any of the preceding claims, **characterized in that** the inertial disk (12) is made of metal and the control disk (10) is made of a plastics material.

8. The control disk as set forth in any of the preceding claims, **characterized in that** each recess (16) is V-shaped.

## Revendications

1. Disque de commande (10) pour un enrouleur de ceinture présentant un disque d'inertie (12) et un doigt d'actionnement (28), le disque d'inertie (12) pouvant tourner par rapport au disque de commande (10) et étant relié à celui-ci par l'intermédiaire d'un accouplement à glissement (16, 22, 24), l'accouplement à glissement (16, 22, 24) étant en prise dans le sens radial avec le disque d'inertie (12), **caractérisé en ce que** le disque d'inertie (12) est pourvu d'une ouverture centrale (14), dont le bord présente une multitude d'évidements radiaux (16), et en ce que le disque de commande (10) est pourvu de plusieurs mentonnets d'arrêt (22) faisant ressort, qui s'engagent à travers l'ouverture centrale (14) et entrent en prise avec le bord de celle-ci.

2. Disque de commande selon la revendication 1, **caractérisé en ce que** chaque mentonnet d'arrêt (22) se projette dans le sens axial depuis le disque de commande (10) et est pourvu d'une patte d'arrêt (24) qui s'étend également dans le sens axial et est reliée au mentonnet d'arrêt (22) à l'extrémité libre de celui-ci.

3. Disque de commande selon la revendication 2, **caractérisé en ce que** le disque de commande (10) est pourvu de plusieurs ouvertures (26), respectivement associées à un mentonnet d'arrêt (22) et se situant toutes sur le même rayon que ces mentonnets, et en ce que chaque patte d'arrêt (24) s'étend jusqu'à l'intérieur de cette ouverture (26).

4. Disque de commande selon la revendication 3, **caractérisé en ce que** les dimensions des pattes d'arrêt (24) et des ouvertures (26) sont choisies de manière telle que chaque patte d'arrêt (24) puisse se déformer élastiquement dans le sens de la circonférence jusqu'à ce qu'elle porte sur la paroi de l'ouverture (26).

5. Disque de commande selon la revendication 4, **caractérisé en ce que** le disque de commande (10) est pourvu de plusieurs pattes de maintien (30) qui traversent l'ouverture centrale (14) du disque d'inertie (12) et immobilisent ce dernier dans le sens axial sur le disque de commande (10).

6. Disque de commande selon la revendication 5, **caractérisé en ce que** trois mentonnets d'arrêt (22) et trois pattes de maintien (30) sont prévus.

7. Disque de commande selon l'une des revendications précédentes, **caractérisé en ce que** le disque d'inertie (12) est réalisé en métal et le disque de commande (10) est réalisé en matière plastique.

8. Disque de commande selon l'une des revendications précédentes, **caractérisé en ce que** chaque évidement (16) est configuré en forme de V.
